# EUROPÄISCHE PATENTSCHRIFT

(11) **EP 0 496 822 B1**
(45) Veröffentlichungstag und Bekanntmachung des Hinweises auf die Patenterteilung: **20.10.1993**
(21) Anmeldenummer: 90916744.7
(22) Anmeldetag: 17.10.1990
(51) Int. Cl.: B01J 20/32, B01D 15/08

(54) **TRÄGERMATERIAL UND SEINE VERWENDUNG IN EINEM VERFAHREN ZUR CHROMATOGRAPHISCHEN TRENNUNG VON NUKLEINSÄUREN**
CARRIER AND ITS USE IN NUCLEIC ACID CHROMATOGRAPHIC SEPARATION
MATERIAU DE SUPPORT ET SON UTILISATION DANS UN PROCEDE DE SEPARATION CHROMATOGRAPHIQUE D'ACIDES NUCLEIQUES

(30) Priorität: 21.10.1989 DE 3935098
(43) Veröffentlichungstag der Anmeldung: 05.08.1992
(73) Patentinhaber: MACHEREY, NAGEL & CO., D-52355 Düren (DE)
(72) Erfinder: SEBESTIAN, Imrich, D-5160 Düren (DE); SIEBER, Manfred, D-5168 Schmidt (DE)
(74) Vertreter: Klöpsch, Gerald, Dr.-Ing. Patentanwalt
(86) Internationale Anmeldenummer: EP9001759
(87) Internationale Veröffentlichungsnummer: WO9105606

(56) Entgegenhaltungen:
- EP-A- 276 138
- WO-A-87/06233
- GB-A- 2 074 892

## Beschreibung

Die Erfindung betrifft ein Trägermaterial sowie seine Verwendung in einem Verfahren zur chromatographischen Trennung von Nukleinsäuren.

Eine rasche und systematische Trennung und Isolierung von Nukleinsäuren ist eine in zahlreichen Bereichen der Biowissenschaften, insbesondere auf dem Gebiet der Gentechnologie, anzutreffende Notwendigkeit. Dabei ist häufig die Isolierung einer einzigen Nukleinsäurespezies aus einem Gemisch von oft mehr als 100 durchzuführen.

Die bekannten Chromatographieverfahren waren jedoch hinsichtlich der erreichbaren Auflösung und Geschwindigkeit der Trennung in die einzelnen Molekülspezies nicht befriedigend.

In der US-A 4,029,583 wurde ein zur Trennung von Proteinen, Peptiden und Nukleinsäuren geeignetes chromatographisches Trägermaterial aus Silikagel beschrieben, welches einen Hohlraumdurchmesser von bis zu 50 nm aufweist, und an das mittels eines Silanisierungsreagenzes eine stationäre Phase mit Anionen- oder Kationenaustauscher bildenden Gruppen gebunden ist, die mit den zu trennenden Substanzen in Wechselwirkung treten. Das silianisierte Silikagel wird mit Wasser in Berührung gebracht, wobei die Gefahr besteht, daß die stationäre Phase polymerisiert und die Poren des Trägermaterials schließt.

EP-A-02 76 133 betrifft das Packen von Chromatografiesäulen, die geeignet sind zur Trennung von Oligonukleotiden, enthaltend inerte, vorzugsweise poröse Trägerteilchen, an die ein Silan gebunden ist, welches eine schwachanionische Austauschgruppe in nächster Nähe zu wenigstens einer polaren nichtionischen Gruppe aufweist. Die Teilchengröße dieser Teilchen, die ausgewählt sind aus der Gruppe von Siliciumdioxid, Aluminiumoxiden und organischen Polymeren, wie vernetztes Polystyrol-Divinlbenzol-Harz, beträgt 2 µm bis 30 µm. Als silanhaltige Verbindung wird vorzugsweise Gammaglycidylpropyltrimethoxysilan und als Modifizierungsmittel ein Hydroxyalkylamin, vorzugsweise 2-Aminoethanol verwendet.

Gemäß der WO 83/03 353, auf die später das EP-B 0104 210 erteilt worden ist, können Nukleinsäuregemische mit hoher Auflösung und bei hoher Durchsatzgeschwindigkeit in ihre Bestandteile aufgetrennt werden, wenn ein chromatografisches Trägermaterial verwendet wird, bei dem der Durchmesser der Hohlräume das ein- bis zwanzigfache der größten Abmessung der jeweils zu isolierenden Nukleinsäure oder der größten Abmessung der größten aller im Gemisch enthaltenen Nukleinsäuren beträgt. Zur Herstellung des chromatographischen Trägermaterials wird dieses zunächst mit einem Silanisierungsreagenz umgesetzt, welches eine flexible Kettengruppe aufweist, die ihrerseits wiederum durch Reaktion mit einem Anionen- oder Kationenaustauscher bildenden Reagenz zum fertigen Trägermaterial umgewandelt wird.

Der vorliegenden Erfindung liegt die Aufgabe zugrunde, die chromatographische Trennung von biologischen Makromolekülen wie langkettigen Oligonukleotiden, hochmolekularen Nukleinsäuren, t-RNS, 5SrRNS, 16S/23SrRNS, einsträngiger DNS (z.B. M13), doppelsträngiger DNS (z.B. Plasmiden und Bruchstücken genomischer DNS) mit gegenüber den Trennmöglichkeiten nach dem Stand der Technik verbesserter Auflösung bei hoher Durchsatzgeschwindigkeit zu ermöglichen. Die verwendeten Trägermaterialien sollen dabei in einem weiten Temperaturbereich einsetzbar sein und eine hohe Beladbarkeit ermöglichen. Weiterhin sollen hohe Anforderungen an Druckbeständigkeit und damit lange Lebensdauer des Trägermaterials erfüllt sein. Das Material soll zudem eine schnelle Gruppentrennung der Nukleinsäuren ohne Verwendung aufwendiger und kostenintensiver Apparaturen wie Hochleistungsflüssigkeitschromatographieanlagen oder Ultrazentrifugen ermöglichen.

Diese Aufgabe wird überraschend durch die Bereitsstellung eines chromatographischen Trägermaterials gelöst, dessen Hohlräume die ein bis zwanzigfache Größe der größten Abmessung der jeweils zu isolierenden Nukleinsäuren aufweisen, welches dadurch erhältlich ist, daß ein Trägermaterial einer Hohlraumgröße von 10 bis 1.000 nm, einer spezifischen Oberfläche von 5 bis 800 m²/g und einer Korngröße von 3 bis 500 µm mit einem Silanisierungsreagenz der allgemeinen Formel R₁R₂R₃SiR₄ umgesetzt wird, wobei R₁ ein Alkoxirest mit 1 bis 10 C-Atomen oder ein Halogenatom oder eine Dialkylaminogruppe mit Alkylresten mit 1 bis 6 C-Atomen ist, R₂ und R₃ ein Kohlenwasserstoffrest mit 1 bis 10 C-Atomen oder ein Alkoxirest mit 1 bis 10 C-Atomen oder ein Halogenatom oder ein durch mindestens eine Oxa- oder Aminogruppe unterbrochene Alkylrest mit 4 bis 20 C-Atomen ist, wobei dieser Rest auch ein- oder mehrfach durch Halogen, Cyan, Nitro, Amino, Mono- alkylamino, Hydroxy oder Aryl substituiert sein kann und R₄ eine Kohlenwasserstoffkette mit 1 bis 20 C-Atomen oder ein durch mindestens eine Oxa- oder Aminogruppe unterbrochener Alkylrest ist, wobei dieser Rest ein- oder mehrfach mit Halogen, Cyan, Nitro, Amino, Monoalkylamino, Dialkylamino, Alkoxy, Hydroxy, Aryl und oder Epoxi substituiert sein kann, insbesondere 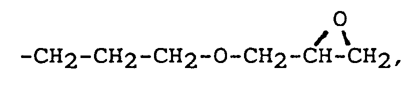
und wobei die die Wechselwirkung mit der zu trennenden Substanz bewirkende flexible Kettengruppierung, die vorzugsweise eine Epoxigruppe trägt, anschließend durch Reaktion mit einem Hydroxialkylamin modifiziert wird.

Erfindungsgemäß kann das Silanisierungsreagenz auch eine bereits mit einem primären oder sekundären Hydroxialkylamin umgesetzte reaktive Gruppe aufweisen.

Die Wahl des Hydroxialkylamins, wie Aminoethanol, Diethanolamin, N-Methylaminoethanol, 1,3-Aminopropanol, 1,4-Aminobutanol, usw., ermöglicht die Variation der Basizität der Ionenaustauschergruppe und damit eine Optimierung für das jeweilige Trennproblem.

Als Träger kommen Kieselgel, Aluminiumoxid, Titandioxid, poröses Glas oder Harze in Betracht. Die Größe der einzusetzenden Trägerpartikel liegt - entsprechend dem Erfordernis, dem Fluß des Eluenten nur einen geringen Widerstand entgegenzusetzen - vorzugsweise im Bereich von 50 bis 500 µm, weiter bevorzugt im Bereich von 50-200 µm.

Die nach dem Stand der Technik häufig verwendeten Diethylaminoethyl (DEAE)-Gruppierungen als Anionenaustauschergruppen ermöglichen - aufgebracht auf makroporöse Kieselgelpartikel mit einem Durchmesser von 100 bis 200 µm - nur einen relativ geringen Bereich für die Elution einzelner Nukleinsäureklassen, wie z.B. Transfer-RNS, Messenger-RNS und einzel- oder doppelsträngiger DNS. Mit 0,4 Mol/l (von 0,25M bis 0,65M KCl) ist dieser Bereich für eine stufenweise Elution der Nukleinsäureklassen zu gering, wie sich aus dem nachfolgenden Beispiel ergibt.

Die chemische Modifizierung durch Bindung von Hydroxialkylaminen auf dem Träger kann in ein- oder zweistufiger Reaktion erfolgen.

Bei einstufiger Reaktion wird der anorganische Träger mit einem Alkoxisilan, das die Hydroxialkylamingruppen bereits enthält, umgesetzt.

Bei der zweistufigen Reaktion erfolgt zunächst eine Umsetzung des Trägers mit einem Alkoxi- oder Chlorsilan, welches reaktionsfähige Gruppen (z.B. Epoxigruppen, Halogenatome, u.s.w.) enthält, und in nachfolgender Reaktion wird das entsprechend der gewünschten Basizität ausgewählte Hydroxialkylamin eingeführt.

Die Silanisierung mit Alkoxisilanen geschieht vorteilhaft mit Hilfe von Katalysatoren wie Aminen oder metallorganischen Verbindungen unter gemilderten Reaktionsbedingungen.

Organische Träger müssen eine reaktionsfähige Gruppe, z.B. eine Epoxigruppe, enthalten, an der in nachfolgender Reaktion die Hydroxialkylamine gebunden werden.

Das erfindungsgemäße Trägermaterial eröffnet die Möglichkeit, ohne aufwendige technische Einrichtungen einzelne Klassen biologischer Makromoleküle wie Nukleinsäuren unter Verwendung eines Stufengradienten aus einem komplexen Gemisch aufzureinigen.

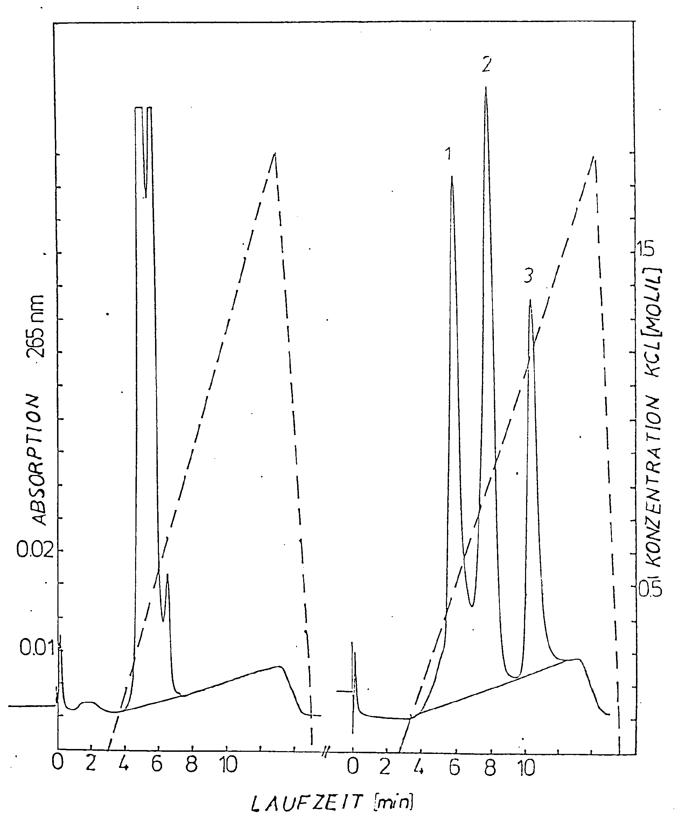

Beispielsweise gelingt es, mit mittels Aminoethanol modifiziertem makroporösem Kieselgel einer Partikelgröße von 100 bis 200 µm, Nukleinsäuregemische durch eine Salzkonzentrationserhöhung im Eluenten um ca. 1,0 Mol/l in verschiedene Gruppen aufzutrennen, wie es dem rechten Chromatogramm der Figur am Beispiel von tRNS (Peak 1), rRNS (Peak 2) und Bruchstücken genomischer DNS (Peak 3) gezeigt wird.

Das Trennverfahren eignet sich bevorzugt zur Trennung von verschiedenen Nukleinsäurearten (Oligo- und Polynukleotide im Größenbereich von 30-50 000 Basen). Verunreinigungen wie Polysaccharide, Proteine und andere zelluläre Substanzen werden schon bei niedrigen Salzkonzentrationen (bis ca. 0,3 M) von der stationären Phase eluiert.

Nach einer besonders bevorzugten Ausführungsform wird ein chromatographisches Trägermaterial auf Kieselgelbasis mit Anionenaustauschergruppen geschaffen, die durch Umsetzung nach dem zuvor beschriebenen Weg mit einem sekundären Hydroxyalkylamin erhalten werden.

Während bei Trägermaterialien mit Anionenaustauschergruppen auf Kieselgelbasis nach dem Stand der Technik stets die Anwesenheit von hohen Konzentrationen an Wasserstoffbrückenbrechern wie Harnstoff oder Formamid erforderlich war, um eine gute Abtrennung langkettiger RNS-Arten (mRNS, rRNS) von langkettigen einzel- oder doppelsträngigen DNS-Arten (Phagen-DNS, Plasmid-DNS) zu erreichen, ist dieser Zusatz bei Verwendung von sekundären Hydroxyalkylaminen zur Bildung der Austauschergruppen nicht erforderlich.

Die geringere Viskosität der Lösung bewirkt eine bessere chromatographische Auflösung und kürzere Trennzeiten.

Überdies kann ein harnstofffreier Puffer über einen längeren Zeitraum hin verwendet werden, da Beeinträchtigungen durch Einflüsse von Zersetzungsprodukten der Wasserstoffbrückenbrecher vermieden werden.

Die Erfindung wird durch nachfolgende Beispiele veranschaulicht:

### Beispiel 1:

50 g Kieselgel einer spezifischen Oberfläche von 10 m²/g und einem mittleren Porendurchmesser von 400 nm werden 12 Stunden bei 170°C getrocknet, mit 300 ml getrocknetem Xylol, 15 ml Silan der Formel 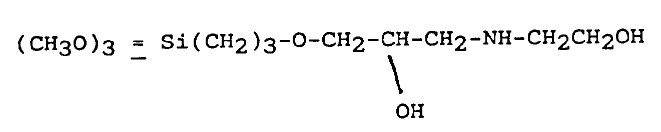
und 0,5 ml Butylamin als Katalysator versetzt, zwei Minuten lang mit Ultraschall behandelt und bei 130°C 3 Stunden unter Ausschluß von Luftfeuchtigkeit gehalten. Das modifizierte Kieselgel wird abfiltriert, mehrmals mit Methylenchlorid, Methanol/Wasser (1:1), Methanol und Methylenchlorid gewaschen und bei 105°C getrocknet.

### Beispiel 2:

50 g getrocknetes Kieselgel einer spezifischen Oberfläche von 22 m²/g und einem mittleren Porendurchmesser von 100 nm werden mit 300 ml getrocknetem Xylol, 15 ml γ -Glycidyloxipropyltrimethoxisilan und 0,5 ml Dibutylzinndilaurat versetzt, 2 Minuten lang mit Ultraschall behandelt und 4 Stunden unter Ausschluß von Luftfeuchtigkeit bei 125°C gehalten. Das modifizierte Kieselgel wird mehrmals mit Methylenchlorid, Methanol und Methylenchlorid gewaschen und bei 105°C getrocknet.
Das Produkt wird anschließend mit 300 ml Tetrahydrofuran und 15 ml N-Methylaminoethanol versetzt und 16 Stunden lang unter Luftfeuchtigkeitsausschluß gekocht. Das Produkt wird entsprechend Beispiel 1 gewaschen und getrocknet.

### Beispiel 3:

30 g Glycidylgruppen enthaltendes Harz (Polymerträger VA-Epoxy Biosynth^{R}, Riedel-de Haen) werden mit 200 ml getrocknetem Tetrahydrofuran und 10 ml Diethanolamin versetzt und 16 Stunden lang unter Rückfluß und Ausschluß von Luftfeuchtigkeit gekocht und entsprechend Beispiel 1 gewaschen und getrocknet.

### Beispiel 4:

50 g mit porösem Siliciumdioxid überzogene Glaskugeln einer spezifischen Oberfläche von 10 m²/g werden wie in Beispiel 2 mit γ -Gycidyloxipropyltrimethoxisilan umgesetzt, gewaschen und getrocknet.
Das Produkt wird anschließend mit 300 ml getrockneten Tetrahydrofuran und 15 ml Aminoethanol versetzt und 16 Stunden unter Rückfluß und Ausschluß von Luftfeuchtigkeit gekocht und entsprechend Beispiel 1 gewaschen und getrocknet.

### Beispiel 5:

a) 0,07 g des erfindungsgemäß modifizierten Endproduktes aus Beispiel 1 wurden trocken in eine Stahlsäule (15 x 4 mm) gepackt und in einer HPLC Anlage auf das Bindungs- und Elutionsverhalten von Nukleinsäuren untersucht.
   Bei einem Fluß von 1 ml/min, einer Detektorwellenlänge von 265 nm wurden 5 µl Nukleinsäuregemisch (tRNS[E.coli] ,rRNS [E.coli] , dsDNS [calf thymus]) injiziert. Die Elution erfolgte mit einem linearen Gradienten von 100 % Eluent A (50 mM Tris/H₃PO₄, 20 % C₂H₅OH, 4 M Harnstoff, pH 7,0) auf 100 % Eluent B (50 mM Tris/H₃PO₄, 20 % C₂H₅OH, 4 M Harnstoff, 1,8 M KCl, pH 7,0) in 10 Minuten.
   Das erhaltene Chromatogramm ist in der rechten Hälfte der Figur dargestellt.
   Eine deutliche Auftrennung der Gemischkomponenten ist zu erkennen.
   (Tris = Trishydroxymethylaminomethan)
b) Vergleichsbeispiel:
   0,07 g Kieselgel, modifiziert gemäß EP-B-0 104 210 mit Diethylaminoethanol (gleiches Ausgangskieselgel wie unter Beispiel 5a) wurden ebenfalls trocken in eine Stahlsäule (15 x 4 mm) gepackt und in einer HPLC Anlage auf das Bindungs- und Elutionsverhalten von Nukleinsäuren wie unter Beispiel 5a untersucht.
   Das Ergebnis ist im linken Chromatogramm der Figur dargestellt, die Peaküberlagerung zeigt, daß es nicht zu einer sauberen Auftrennung der Gemischkomponenten kommt.

### Es folgt eine Aufzählung bevorzugter Ausführungsformen der vorliegenden Erfindung:

1. Chromatographisches Trägermaterial, dessen Hohlräume die ein- bis zwanzigfache Größe der größten Abmessung der zu trennenden Nukleinsäuren aufweisen, welches dadurch erhältlich ist, daß ein Ausgangsträgermaterial einer Hohlraumgröße von 10 bis 1000 nm, einer spezifischen Oberfläche von 5 bis 800 m²/g und einer Korngröße von 3 bis 500 µm mit einem Silanisierungsreagenz umgesetzt wird, wobei das Silanisierungsreagenz mindestens eine bereits mit einem primären oder sekundären Hydroxialkylamin umgesetzte reaktive Gruppe aufweist
   oder eine mit einem Hydroxialkylamin umsetzbare reaktionsfähige Gruppe wie eine Epoxigruppe oder Halogenatome enthält, die in einer weiteren Reaktionsstufe mit einem Hydroxialkylamin zur Reaktion gebracht wird.
2. Chromatographisches Trägermaterial nach 1, wobei das Grundträgermaterial Kieselgel, Aluminiumoxid, Titandioxid, poröses Glas oder Polymerharzträger ist.
3. Chromatographisches Trägermaterial nach 1 oder 2, wobei das Grundträgermaterial eine Partikelgröße zwischen 50 und 500 µm aufweist.
4. Chromatographisches Trägermaterial nach 3, wobei das Grundträgermaterial ein makroporöses Kieselgel einer Partikelgröße zwischen 100 und 200 µm ist.
5. Chromatographisches Trägermaterial nach 1 bis 4, wobei die mit dem Hydroxyalkylamin bereits umgesetzte oder reaktionsfähige Gruppe, die an das Silanisierungsreagenz gebunden oder darin eingeführt werden kann, die γ -Glycidyloxypropylgruppe ist.
6. Chromatographisches Trägermaterial nach 1 bis 5, wobei das eingeführte Hydroxialkylamin Aminoethanol, Diethanolamin oder N-Methylaminoethanol ist.
7. Chromatographisches Trägermaterial nach 4, wobei das Grundträgermaterial Kieselgel ist, welches mit einem sekundären Hydroxyalkylamin modifiziert ist.
8. Verfahren zur Trennung von Nukleinsäuren unter Verwendung der chromatographischen Trägermaterialien gemäß 1 bis 7, wobei die Elution unter Verwendung eines Salzkonzentrationsgradienten in einem Salzkonzentrationsbereich größer gleich 1 Mol/l durchgeführt wird.
9. Verfahren zur Trennung von Nukleinsäuren, wobei ein chromatographisches Trägermaterial gemäß 7 verwendet wird, und daß zur Trennung keine Wasserstoffbrückenbrecher wie Harnstoff oder Formamid zugesetzt werden.
10. Verfahren nach 8 oder 9, wobei Oligo- und Polynukleotide im Größenbereich von 30 bis 50000 Basen getrennt werden.
11. Verfahren nach 8 bis 10, wobei gleichzeitig Polysacharide, Proteine und niedermolekulare zelluläre Substanzen bei Salzkonzentrationen bis zu 0,3 Mol/l eluiert werden.

## Patentansprüche

1. Chromatographisches Trägermaterial, dessen Hohlräume die ein- bis zwanzigfache Größe der größten Abmessung der zu trennenden Nukleinsäuren aufweisen, welches dadurch erhältlich ist, daß ein Ausgangsträgermaterial einer Hohlraumgröße von 10 bis 1000 nm, einer spezifischen Oberfläche von 5 bis 800 m²/g und einer Korngröße von 3 bis 500 µm mit einem Silanisierungsreagenz umgesetzt wird,
wobei das Silanisierungsreagenz mindestens eine bereits mit einem primären oder sekundären Hydroxialkylamin umgesetzte reaktive Gruppe aufweist
oder eine mit einem Hydroxialkylamin umsetzbare reaktionsfähige Gruppe wie eine Epoxigruppe oder Halogenatome enthält, die in einer weiteren Reaktionsstufe mit einem Hydroxialkylamin zur Reaktion gebracht wird,
dadurch gekennzeichnet, daß das eingeführte Hydroxialkylamin Aminoethanol, Diethanolamin oder N-Methylaminoethanol ist.

2. Chromatographisches Trägermaterial nach Anspruch 1, dadurch gekennzeichnet, daß das Grundträgermaterial Kieselgel, Aluminiumoxid, Titandioxid, poröses Glas oder Polymerharzträger ist.

3. Chromatographisches Trägermaterial nach Anspruch 1 oder 2, dadurch gekennzeichnet, daß das Grundträgermaterial eine Partikelgröße zwischen 50 und 500 µm aufweist.

4. Chromatographisches Trägermaterial nach Anspruch 3, dadurch gekennzeichnet, daß das Grundträgermaterial ein makroporöses Kieselgel einer Partikelgröße zwischen 100 und 200 µm ist.

5. Chromatographisches Trägermaterial nach einem der Ansprüche 1 bis 4, dadurch gekennzeichnet, daß die mit dem Hydroxialkylamin bereits umgesetzte oder reaktionsfähige Gruppe, die an das Silanisierungsreagenz gebunden oder darin eingeführt werden kann, die γ-Glycidyloxypropylgruppe ist.

6. Verfahren zur Trennung von Nukleinsäuren unter Verwendung der chromatographischen Trägermaterialien gemäß einem der Ansprüche 1 bis 5, dadurch gekennzeichnet, daß die Elution der Nukleinsäuregemische innerhalb eines chromatographischen Vorgangs bei einer Salzkonzentrationserhöhung um ca. 1 Mol/l durchgeführt wird.

7. Verfahren zur Trennung von Nukleinsäuren, dadurch gekennzeichnet, daß ein chromatographisches Trägermaterial gemäß Anspruch 5 verwendet wird, und daß zur Trennung keine Wasserstoffbrückenbrecher wie Harnstoff oder Formamid zugesetzt werden.

8. Verfahren nach Anspruch 6 oder 7, dadurch gekennzeichnet, daß Oligo- und Polynukleotide im Größenbereich von 30 bis 50000 Basen getrennt werden.

9. Verfahren nach einem der Ansprüche 6 bis 8, dadurch gekennzeichnet, daß gleichzeitig Polysaccharide, Proteine und niedermolekulare zelluläre Substanzen bei Salzkonzentrationen bis zu 0,3 Mol/l eluiert werden.

## Claims

1. A chromatographic carrier having cavities that are one to twenty times larger than the largest dimension of the nucleic acids to be separated is obtained by reacting a base carrier material with cavities of 10 to 1000 nm, a specific surface of 5 to 800 m²/g and a grain size of 3 to 500 µm with a silylating reagent, the silylating reagent having at least one reactive group already reacted with a primary or secondary hydroxyalkylamine,
or comprising a reactive group capable of being reacted with a hydroxyalkylamine, such as an epoxide group or halogen atoms, which is reacted with a hydroxyalkylamine in a subsequent reaction stage, characterized in that the introduced hydroxyalkylamine is aminoethanol, diethanolamine or N-methylaminoethanol.

2. The chromatographic carrier according to claim 1 characterized in that the base carrier material is silica gel, aluminum oxide, titanium dioxide, porous glass or polymer resin carrier.

3. The chromatographic carrier according to claim 1 or 2 characterized in that the base carrier material has a particle size between 50 and 500 µm.

4. The chromatographic carrier according to claim 3 characterized in that the base carrier material is a macroporous silica gel having a particle size between 100 and 200 µm.

5. The chromatographic carrier according to any one of claims 1 to 4 characterized in that the group already reacted with hydroxyalkylamine or capable of being reacted, which may be bonded to or introduced in the silylating reagent, is the γ-glycidyloxypropyl-group.

6. A method for separating nucleic acids using chromatographic carriers as defined in any one of claims 1 to 5 characterized in that the elution of the nucleic acid mixtures during a chromatographic procedure is carried out at an increase of the salt concentration by approximately 1 mol/l.

7. A method for the separation of nucleic acids characterized in that a chromatographic carrier according to claim 5 is used and that no agents capable of breaking hydrogen bridges, such as urea or formamide, are added for the separation.

8. The method according to claim 6 or 7 characterized in that oligo- or polynucleotides in the order of 30 to 50,000 bases are separated.

9. The method according to any one of claims 6 to 8 characterized in that polysaccharides, proteins and low-molecular cellular substances are eluted simultaneously at salt concentrations of up to 0.3 mol/l.

## Revendications

1. Matériau de support chromatographique dont les espaces vides représentent de 1 à 20 fois la grandeur de la plus grande taille des acides nucléiques à séparer, que l'on peut obtenir par la réaction d'un matériau de support de départ d'une grandeur des espaces creux de 10 à 1000 nm, d'une surface spécifique de 5 à 800 m²/g et d'un calibre des grains de 3 à 500 mym, avec un réactif de silanisation,
où le réactif de silanisation présente au moins un groupe réactif ayant déjà réagi avec une hydroxyalkylamine primaire ou secondaire,
ou contient un groupe réactif susceptible de réagir avec une hydroxyalkylamine, comme un radical époxy ou des atomes d'halogènes, que l'on fait réagir avec une hydroxyalkylamine au cours d'une étape de réaction supplémentaire,
caractérisé en ce que l'hydroxyalkylamine introduite est l'aminoéthanol, la diéthanolamine, ou le N-méthylaminoéthanol.

2. Matériau de support chromatographique suivant la revendication 1, caractérisé en ce que le matériau de support de base est un support en gel de silice, en oxyde d'aluminium, en dioxyde de titane, en verre poreux ou en une résine polymérique.

3. Matériau de support chromatographique suivant la revendication 1 ou 2, caractérisé en ce que le matériau de support de base présente un calibre des particules de 50 à 500 mym.

4. Matériau de support chromatographique suivant la revendication 3, caractérisé en ce que le matériau de support de base est un gel de silice macroporeux d'un calibre des particules de 100 à 200 mym.

5. Matériau de support chromatographique suivant l'une quelconque des revendications 1 à 4, caractérisé en ce que le radical réactif ou ayant déjà réagi avec l'hydroxyalkylamine, qui peut être lié au réactif de silanisation, ou qui peut y être introduit, est le radical gamma-glycidyloxypropyle.

6. Procédé de séparation d'acides nucléiques, qui recourt à l'emploi de matériaux de supports chromatographiques suivant l'une quelconque des revendications 1 à 5, caractérisé en ce que l'on entreprend l'élution des mélanges d'acides nucléiques au cours d'un processus chromatographique avec une élévation de la concentration en sel d'environ 1 mole/litre.

7. Procédé de séparation d'acides nucléiques, caractérisé en ce que l'on utilise un matériau de support chromatographique suivant la revendication 5 et en ce qu'en vue de la séparation on n'ajoute pas d'agents brisant les ponts d'hydrogène, comme l'urée ou le formamide.

8. Procédé suivant la revendication 6 ou 7, caractérisé en ce que l'on sépare les oligonucléotides et les polynucléotides dans la plage des grandeurs de 30 à 50000 bases.

9. Procédé suivant l'une quelconque des revendications 6 à 8, caractérisé en ce que l'on élue simultanément polysaccharides, protéines et substances cellulaires de faible poids moléculaire à des concentrations en sel allant jusqu'à 0,3 mole/litre.
